# EUROPEAN PATENT SPECIFICATION

(11) **EP 3 647 496 B1**
(45) Date of publication and mention of the grant of the patent: **01.12.2021**
(21) Application number: 18765483.5
(22) Date of filing: 26.06.2018
(51) Int. Cl.: E02B 3/02, E02F 5/28, E02F 3/88, E02F 3/92

(54) **SYSTEM FOR CLEANING HETEROGENEOUS SLUDGE DEPOSITED IN HYDRAULIC FACILITIES**
SYSTEM ZUR REINIGUNG VON IN HYDRAULISCHEN ANLAGEN ABGELAGERTEM HETEROGENEM SCHLAMM
SYSTÈME DE NETTOYAGE DE BOUES HÉTÉROGÈNES DÉPOSÉES DANS DES INSTALLATIONS HYDRAULIQUES

(30) Priority: 27.06.2017 ES 201730845
(43) Date of publication of application: 06.05.2020
(73) Proprietor: Cabezas Carbonero, Juan Francisco, 28917 Leganes (Madrid) (ES)
(72) Inventor: Cabezas Carbonero, Juan Francisco, 28917 Leganes (Madrid) (ES)
(74) Representative: Sahuquillo Huerta, Jesús
(86) International application number: PCT/ES2018/070450
(87) International publication number: WO 2019/002648

(56) References cited:
- EP-A2- 1 800 767
- WO-A1-03/010388
- DE-A1- 4 315 764
- FR-A1- 2 666 833

## Description

The present invention relates to a system for cleaning heterogeneous sludge deposited in hydraulic facilities, such as reservoirs, canals, basins, etc.

### State of the art

One of the main causes of the accumulation of sludge in these types of facilities is the run-off created by storms which, along with certain techniques used in nearby farms, makes it so the resulting fluid in the hydraulic facility does not only contain water, but also the remnants of dirt, rocks, branches, plants or other elements.

This fact makes it so the fluid that runs off, which is highly heterogeneous, runs through small streams and river courses until reaching said hydraulic facilities, where it is definitively deposited, until by human action, generally pumping, it is transferred to other facilities. This leads to a problem of clogging, which reduces the hydraulic capacity of the facility, becoming completely clogged on some occasions.

Both the heterogeneity and the cohesion of said fluid, which at times has a texture similar to that of clay, complicate cleaning tasks, such as cleaning irrigation canals, and cause clogging problems downstream, such as in drip irrigation systems. This problem has not been solved by current methods.

There are currently few sludge cleaning methods used in these types of hydraulic facilities, such as: the sludge extraction method by means of a backhoe when the canal is dry, and the sludge extraction method by means of a backhoe when the channel is flooded. Both methods cause a series of drawbacks, such as: the stoppage of the hydraulic facility, defects in the facility due to the use of the heavy machinery, a loss in the irrigation production, C02 emissions. In the same method, but when the channel is flooded, there are other drawbacks, such as the creation of large amounts of particles in suspension, which lead to clogging of the irrigation facilities downstream.

There are also other robotic methods, but they have little flow capacity and are practically inefficient in highly cohesive fluid, used for example in marine archaeological extractions. Some of them are also used for cleaning the bottoms of hydraulic facilities, with higher flows, but they lose effectiveness when the sludge or runoff has little homogeneity.

Said affected hydraulic facilities have a high level of clogging due to the fact that said cleaning difficulties, which, for example in basins, make it necessary on some occasions to open a hole on one of the sides of the basin to extract the sludge, the opened hole needing to be subsequently reconstructed.

DE4315764A1 discloses a process and apparatus for desludging flat bodies of water using a combined apparatus for sludge removal, the buffer vessels having a pre-separator, the separation of water and solids (digested sludge and other solid constituents), the treatment of the end products up to supply to the end consumer and the post-treatment of water up to the attainment of drinking water quality and subsequent aeration.

FR2666833A1 discloses a floating suction (vacuum) device for sea beds, intended to suck up the sand or other components from the bed of the water, for the purpose of recovering, in a mesh (sieve) provided for this purpose, the various objects which are buried therein.

WO03010388A1 discloses a method and apparatus for cleaning a water area wherein the water basin is provided with a suction pipe system arranged in connection with the lake, pond or equivalent and connected to a dredging apparatus working under water, by means of which the sludge or similar waste produced or at least part of it is passed into a suction pipe and through it further into a sedimentation basin.

EP1800767A2 discloses an apparatus and method for sludge removal including a sludge removal head with a sludge suction duct and an water supply duct with open end portions alongside each other, and a filter adjacent to the open ends of the suction duct and the water supply duct so that the sludge is extracted through the filter.

The lack of existing equipment and methods for solving these aforementioned drawbacks makes it so the present invention is configured as an integral solution to the same, resulting in a functional assembly that meets all of the specific needs of these types of hydraulic facilities.

### Description of the invention

The object of the present invention is to provide a modular and configurable system that adapts to the different types of hydraulic facilities (reservoirs, canals, basins, etc.), without altering the normal functioning of the same and generating few or no particles in suspension.

The present invention is defined according to the characteristics of claim 1. Preferred embodiments of the invention are defined in the dependent claims.

The system according to the present invention comprises a platform made up of diverse mechanical assemblies which move within the hydraulic facility, by means of different mobile supports, suctioning the sludge at the desired depth into one or several containers incorporated in the same platform. This platform removes the sludge of the hydraulic facility by means of a guided pass of the suction mobile support over the sludge to be extracted, the combination and actuation method of which varies depending on the hydraulic facility. These mechanical assemblies that make up the platform allow different functions to be carried out, such as: fastening the platform to the hydraulic facility, moving it inside the facility, guiding and driving the suction element or elements of the platform to the desired depth and position, and housing one or several containers, forming a compact and modular system.

The system is also different with respect to other systems of the state of the art due to the suction capacity thereof for considerably large sludge elements (such as branches, rocks, etc.). This is achieved by the system by complementing the suction element with a cutting and/or shredding element coupled to the pumping unit.

In other aspects, for example, such as in reservoirs, this same system allows for an ecological method of transferring heterogeneous sediments retained in the reservoir, allowing said materials within the containment levees of the reservoir (such as mud, sand and small stones) to be transported downstream, utilizing the ecological flow regime of the affected water section. Depending on the distances, repumping may be necessary, which can be done from the same platform or by means of secondary container platforms, which in turn can act as inertia or decanting containers in the case that there are very low ecological flows, such that the system allows the percentage of sludge to be poured to be managed/adjusted with greater precision. The same may in turn be located on land.

### Brief description of the drawings

For the purpose of helping to make the foregoing description more readily understandable, it is accompanied by a set of drawings which, schematically and by way of illustration and not limitation, represent one of the embodiments.
Figure 1 shows a first embodiment of the system according to the present invention, wherein one can see an elevation view of the system, along with a cross section of the type of hydraulic facility for this type of embodiment, in this case a canal. One can see the different mechanical assemblies that make up the system.
Figure 2 shows an isometric view of the system and of the canal-type hydraulic facility.
Figure 3 shows an isometric view of the system, wherein the different mechanical/functional assemblies that make up the same can be distinguished.
Figure 4 shows an isometric view of the mechanical/functional assembly, called a floating platform.
Figure 5 shows an isometric view of an embodiment of the fastening system of the mechanical/functional assembly, called a floating platform.
Figure 6 shows an isometric view of the mechanical/functional assembly, which is called a mobile support.
Figure 7 shows an isometric view of the mechanical/functional assembly, which is called a first container.
Figure 8 is an elevation view in cross-section along line I-I of figure 7.

### Description of preferred embodiments

The preferred embodiment described corresponds to a cleaning system for heterogeneous sludge in a canal-type hydraulic facility.

This same system and method can also be used in other types of hydraulic facilities, including at least the same basic mechanical/functional elements that are described below, being configured in the assembly thereof as a modular system of variable configuration and geometry.

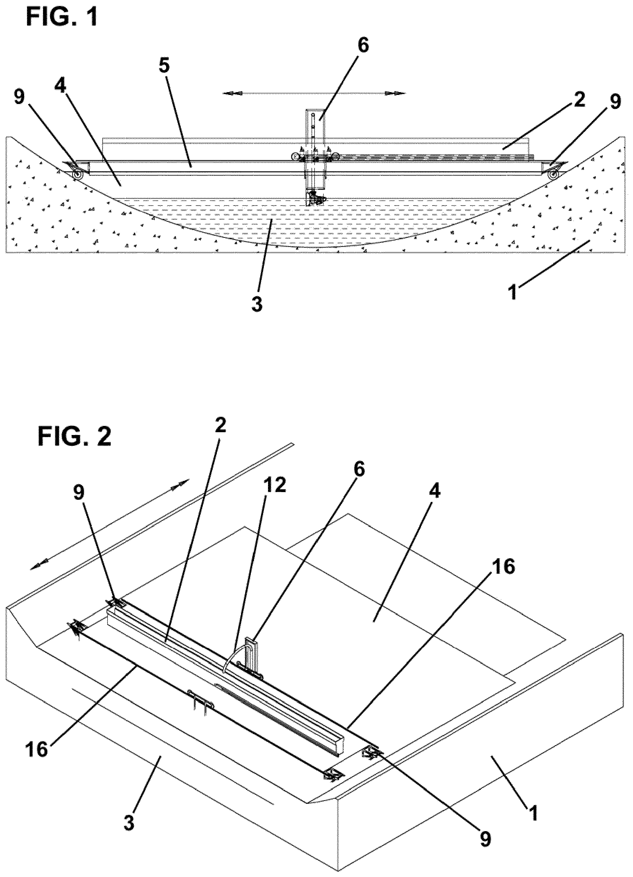

Figures 1 and 2 show a first embodiment of the system according to the present invention, corresponding to the sludge cleaning system configured for a canal-type hydraulic facility, which comprises a machine assembly 2 for cleaning sludge 3 that is introduced inside the hydraulic facility 1, and which moves over the same floating by means of manual or mechanical propulsion. Flotation is provided by the pushing force exerted by the water 4. The cleaning method of the system is done by means of guided passes over the sludge to be extracted.

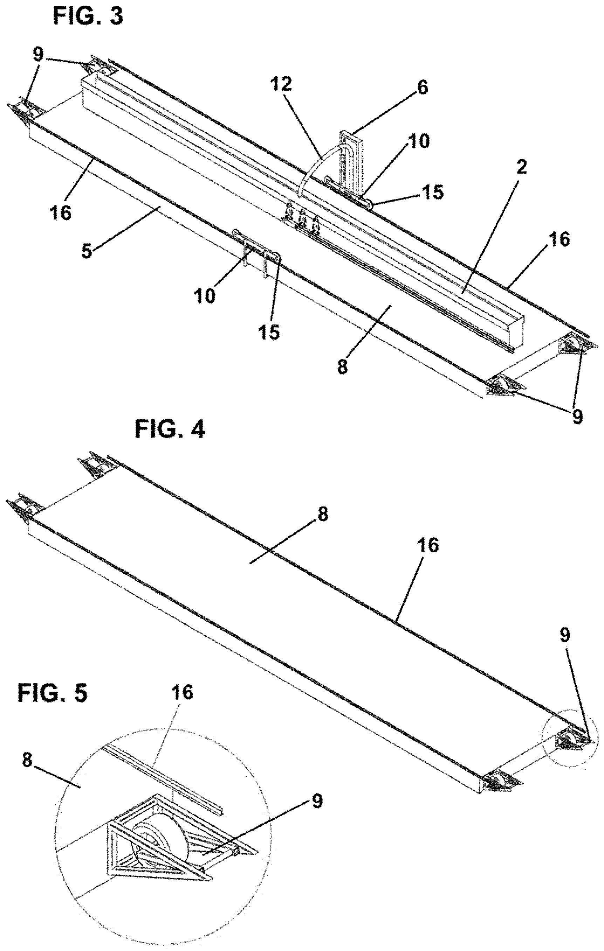

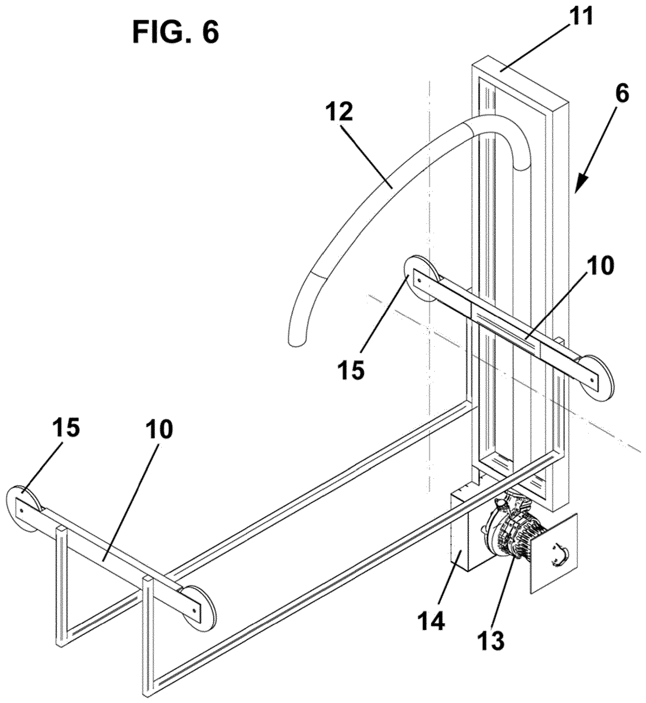

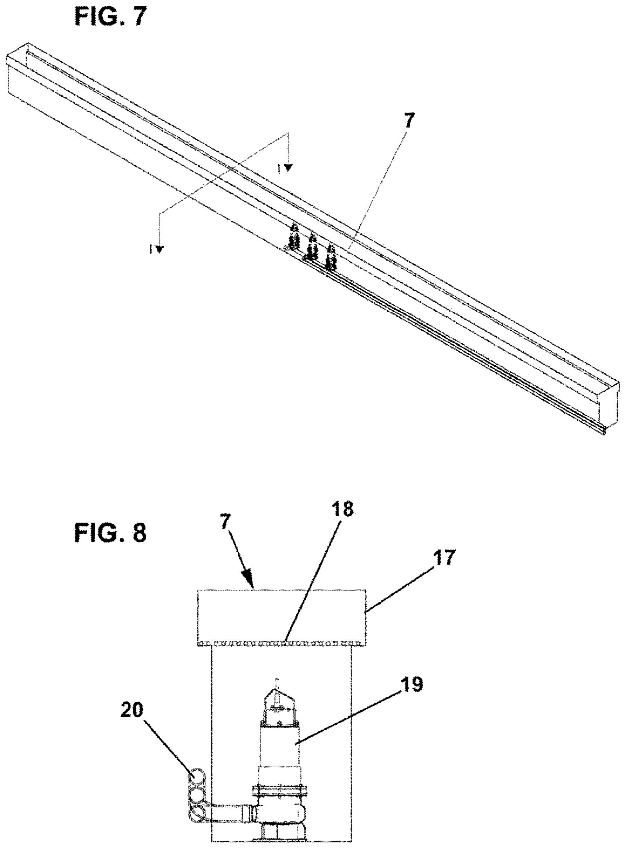

The system according to the present invention in figure 3 is made up of at least: a mechanical/functional assembly that acts as a floating platform 8, detailed in figure 4 and 5; a mechanical/functional assembly that acts as a suction mobile support 6, detailed in figure 6; and a mechanical/functional assembly that acts as a primary container 7 for the suctioned sludge, detailed in figure 7 and 8.

Figures 4 and 5 show the basic configuration of the mechanical/functional assembly that acts as a floating platform, made up of at least a hermetically closed element 5 with a hollow inside, which provides floatability to the system, a structural metal casing 8 in the way of a case of the element 5 and by fastening elements 9 from the floating platform to the hydraulic facility. Said floating platform functions as a base and anchor for the rest of the mechanical/functional assemblies described in figure 6 and 7.

Figure 5 shows an embodiment of the fastening system 9. It is the element that maintains the entire system in the correct position and orientation within the hydraulic facility. This, in turn, by means of motorization or manual actuation, allows the entire system to move/advance inside the hydraulic facility 1. It can incorporate pistons or a pivot and/or a cushioning system, in order to maintain the desired contact with the surface of the hydraulic facility, both before and during the floatation of the system.

Figure 6 shows the basic configuration of the mechanical/functional assembly that acts as a mobile support for the suction elements 12, 13 and 14. It consists of an assembly of mobile frames 10 and 11 that allow vertical, horizontal and rotational movement of the suction elements with respect to the floating platform of figure 4, movements that are not necessarily simultaneous, the combination and actuation method of which can vary depending on the hydraulic facility. For example, they may be by means of electromechanical or electrohydraulic actuation. The mobile frame 11 functions as a fastening system and facilitates the vertical movement of at least the following suction elements: suction pipe 12, suction device 13, and sifting screen 14, the casing of which can function as a guide. The mobile fame 10 allows for horizontal movement by means of a guide system, for example by means of wheels 15 that fit into a guide 16 housed in the casing 8 of the floating platform of figure 5.

The operation is the following: we vertically position the suction elements 12, 13 and 14 by means of the mobile frame 11. We do guided passes by means of horizontal movement of the mobile frame 10, and at the same time we suction the sludge. This, in turn, is transferred and guided to the first container 7 of figure 7 and 8. Once the sludge is suctioned from the desired area, we move the system downstream.

Figures 7 and 8 show the mechanical/functional assembly known as the first container 7. The design of this container depends on the suction power of the system and on the wind in the area, and consists of at least a casing 17 that functions as a container for housing the sludge, and a sifting screen 18. As optional elements according to the needs of the hydraulic facility, it can incorporate at least a secondary suction/transfer device 19, and suction pipes 20 for propelling the sludge to the second container, even to a third container, both, in this case, being located outside of the hydraulic facility and not represented in the figures. These optional second and third containers would serve for the definitive treatment of the sludge, as if it were waste we were dealing with, based on the classification given to the same by competent authorities.

It must be noted that the system can also include the following characteristics:
- Positioning of the equipment and system with the help of GPS, the movement being, for example, by means of an outboard motor, traction by means of a cable secured to the infrastructure, caterpillar track, articulated arm, etc.
- The floating platform 8 can incorporate an articulated arm to perform other types of auxiliary/complementary tasks to that of sludge extraction, for example, extracting submerged elements that cannot be sucked up, laying piping, etc.
- The dimensions and sizing of the installed capacity (the latter being directly related to the extraction capacity) is adapted to the infrastructure requirements. Therefore, it can work in all types of hydraulic facilities/infrastructures: channels, basins, rivers, reservoirs, etc., and even in the sea.
- An electric generator can possibly, but not necessarily, be situated on the platform according to the needs of the work.
- A system for collecting liquids that are potential pollutants can be incorporated.
- The suction elements can have both vertical and horizontal suction directions at the same time.
- It allows obstacles present in the hydraulic facility (bridges, pipes, etc.) to be overcome by submergence, enabling the inside of the platform to fill with water (submarine type), or, even with the same aim, it can be configured as a foldable platform by being divided into parts, being joined by means of articulated elements.
- The system is able to dump the extracted sludge circumventing the very infrastructure in which the sludge was retained (dam, embankment, canal, etc.) by means of an areal, floating, terrestrial, underground or submersible bypass through flexible, semirigid or rigid suction pipes.
- The system can incorporate a multi-probe for measuring in real time the quality of the extracted fluid and be able to detect pollutants.
- The system can comprise an echo sounder for performing bathymetric measurements of the sludge bed before and after extraction.
- The system can also comprise subaquatic visual and recording elements, in clear water, by means of closed-circuit television cameras, and for pipes, in which case echo sounding would be used.
- The system can be connected to different treatment plants for the extracted sludge (trucks, collection, decontamination, dehydration, etc.).
- The system can comprises a battery of high-pressure water injectors before the sifting screen 14 and another after the suction element 13, the height and direction of which can be adjusted.
- The system can also comprise a battery of high-pressure water injectors before and after the mobile frame 10, according to the advance direction, the height and direction of which can be adjusted.
- The system can also comprise a system for measuring in real time the concentration of liquid sludge that flows through the suction pipes 20.
- The mobile support 6 can also comprise a second sifting screen 14, which incorporates a hydromechanical system that shoots a mixture of water and air onto the sludge and makes it vibrate just before the suction carried out by the suction device 13.
- Furthermore, said floating platform 8 comprises said fastening elements 9 for the fastening thereof to the hydraulic facility 1. The maneuvering of the fastening elements 9 can be by means of oleo-mechanic systems and can be fastened by means of a simple support or by locking to the infrastructure.

Thus, by way of a non-limiting example, in applying the system according to the present invention to reservoirs, the use thereof will be in the following way:
- Positioning the system next to the body of the dam, upstream from the same, on the vertical of the scour outlet.
- Performing a sufficient extraction of the sludge to create a well from the surface to the aforementioned scour outlet.

- Performing this operation to each of the scour outlet of the dam.
- Then, opening in the sludge submerged channels, as well as wells that have been opened, from the mouth of the same to the head or heads of the reservoir. This way, the scour outlets are prepared to allow for the passage of sludge downstream from the dam.
- The extracted sludge can be transferred downstream from the dam by means of a bypass, relocated in the same reservoir, or treated in any of the aforementioned ways.

## Claims

1. A system for cleaning heterogeneous sludge deposited in hydraulic facilities, comprising a machine assembly (2) mounted on a floating platform (8) that floats on the water of the hydraulic facility,
said machine assembly (2) comprising at least a first suction pipe (20) connected to a suction and transfer device (19),
wherein the system also comprises a horizontal and vertical mobile support (6) with respect to said floating platform (8), the mobile support (6) being connected to the machine assembly (2) by means of a second suction pipe (12).

2. The system for cleaning heterogeneous sludge deposited in hydraulic facilities according to claim 1, wherein said machine assembly (2) comprises a casing (17) for containing suctioned sludge.

3. The system for cleaning heterogeneous sludge deposited in hydraulic facilities according to claim 2, wherein said machine assembly (2) also comprises a first sifting screen (18) at the entrance of said casing (17).

4. The system for cleaning heterogeneous sludge deposited in hydraulic facilities according to claim 1, wherein said mobile support (6) comprises a suction device (13) which suctions the sludge to said second suction pipe (12).

5. The system for cleaning heterogeneous sludge deposited in hydraulic facilities according to claim 1 or 4, wherein said mobile support (6) also comprises a second sifting screen (14).

6. The system for cleaning heterogeneous sludge deposited in hydraulic facilities according to claim 1, wherein said mobile support (6) moves along guides (16) on the floating platform (8) by means of wheels (15).

7. The system for cleaning heterogeneous sludge deposited in hydraulic facilities according to claim 1, wherein said floating platform (8) comprises fastening elements (9) for the fastening thereof to a hydraulic facility (1).

8. The system for cleaning heterogeneous sludge deposited in hydraulic facilities according to claim 1 or 4, wherein said mobile support (6) can also comprise a second sifting screen (14), which incorporates a hydromechanical system that shoots a mixture of water and air onto the sludge, and makes it vibrate just before the suction carried out by the suction device (13).

9. The system for cleaning heterogeneous sludge deposited in hydraulic facilities according to claim 1, wherein said floating platform (8) comprises fastening elements (9) for the fastening thereof to a hydraulic facility (1).

## Patentansprüche

1. System zur Reinigung von heterogenem Schlamm, der sich in hydraulischen Anlagen ablagert, mit einer Maschineneinheit (2), die auf einer schwimmenden Plattform (8) montiert ist, die auf dem Wasser der hydraulischen Anlage schwimmt,
wobei die Maschineneinheit (2) mindestens ein erstes Saugrohr (20) umfasst, das mit einer Ansaug- und Fördervorrichtung (19) verbunden ist,
**dadurch gekennzeichnet, dass** das System außerdem einen in Bezug auf die schwimmende Plattform (8) horizontal und vertikal beweglichen Träger (6) umfasst, wobei der bewegliche Träger (6) mit der Maschineneinheit (2) über eine zweite Saugleitung (12) verbunden ist.

2. System zur Reinigung von heterogenem Schlamm, der sich in hydraulischen Anlagen ablagert, nach Anspruch 1, wobei die Maschinenbaugruppe (2) ein Gehäuse (17) zur Aufnahme des angesaugten Schlamms umfasst.

3. System zur Reinigung heterogener Schlämme, die in hydraulischen Anlagen abgelagert werden, nach Anspruch 2, wobei die Maschinenbaugruppe (2) auch ein erstes Sieb (18) am Eingang des Gehäuses (17) umfasst.

4. System zur Reinigung von heterogenem Schlamm, der sich in hydraulischen Anlagen ablagert, nach Anspruch 1, wobei der bewegliche Träger (6) eine Saugvorrichtung (13) umfasst, die den Schlamm zu dem zweiten Saugrohr (12) saugt.

5. System zur Reinigung von in hydraulischen Anlagen abgelagertem heterogenem Schlamm nach Anspruch 1 oder 4, wobei der mobile Träger (6) auch ein zweites Sieb (14) umfasst.

6. System zur Reinigung von heterogenem Schlamm, der sich in hydraulischen Anlagen ablagert, nach Anspruch 1, wobei sich der mobile Träger (6) mit Hilfe von Rädern (15) entlang von Führungen (16) auf der schwimmenden Plattform (8) bewegt.

7. System zur Reinigung von heterogenem Schlamm, der sich in hydraulischen Anlagen ablagert, nach Anspruch 1, wobei die schwimmende Plattform (8) Befestigungselemente (9) zu ihrer Befestigung an einer hydraulischen Anlage (1) umfasst.

8. System zur Reinigung von heterogenen Schlämmen, die in hydraulischen Anlagen nach Anspruch 1 oder 4 abgelagert werden, wobei der mobile Träger (6) auch ein zweites Sieb (14) umfassen kann, das ein hydromechanisches System enthält, das ein Wasser-LuftGemisch auf den Schlamm schießt und ihn kurz vor dem Absaugen durch die Absaugvorrichtung (13) in Schwingung versetzt.

9. System zur Reinigung von heterogenem Schlamm, der sich in hydraulischen Anlagen ablagert, nach Anspruch 1, wobei die schwimmende Plattform (8) Befestigungselemente (9) zu ihrer Befestigung an einer hydraulischen Anlage (1) umfasst.

## Revendications

1. Système de nettoyage de boues hétérogènes déposées dans des installations hydrauliques, comprenant un ensemble machine (2) monté sur une plate-forme flottante (8) qui flotte sur l'eau de l'installation hydraulique,
Ledit ensemble de machine (2) comprenant au moins un premier tuyau d'aspiration (20) relié à un dispositif d'aspiration et de transfert (19),
**caractérisé en ce que** le système comprend également un support mobile horizontal et vertical (6) par rapport à ladite plate-forme flottante (8), le support mobile (6) étant relié à l'ensemble machine (2) au moyen d'un second tuyau d'aspiration (12).

2. Système de nettoyage de boues hétérogènes déposées dans des installations hydrauliques selon la revendication 1, dans lequel ledit ensemble machine (2) comprend un carter (17) destiné à contenir les boues aspirées.

3. Système de nettoyage de boues hétérogènes déposées dans des installations hydrauliques selon la revendication 2, dans lequel ledit ensemble de machine (2) comprend également un premier tamis de criblage (18) à l'entrée dudit boîtier (17).

4. Système de nettoyage de boues hétérogènes déposées dans des installations hydrauliques selon la revendication 1, dans lequel ledit support mobile (6) comprend un dispositif d'aspiration (13) qui aspire les boues vers ledit second tuyau d'aspiration (12).

5. Système de nettoyage de boues hétérogènes déposées dans des installations hydrauliques selon la revendication 1 ou 4, dans lequel ledit support mobile (6) comprend également un second tamis de criblage (14).

6. Système de nettoyage de boues hétérogènes déposées dans des installations hydrauliques selon la revendication 1, dans lequel ledit support mobile (6) se déplace le long de guides (16) sur la plate-forme flottante (8) au moyen de roues (15).

7. Système de nettoyage de boues hétérogènes déposées dans des installations hydrauliques selon la revendication 1, dans lequel ladite plate-forme flottante (8) comprend des éléments de fixation (9) pour sa fixation à une installation hydraulique (1).

8. Système de nettoyage de boues hétérogènes déposées dans des installations hydrauliques selon la revendication 1 ou 4, dans lequel ledit support mobile (6) peut également comprendre un second crible (14), qui incorpore un système hydromécanique qui projette un mélange d'eau et d'air sur la boue, et la fait vibrer juste avant l'aspiration effectuée par le dispositif d'aspiration (13).

9. Système de nettoyage de boues hétérogènes déposées dans des installations hydrauliques selon la revendication 1, dans lequel ladite plate-forme flottante (8) comprend des éléments de fixation (9) pour sa fixation à une installation hydraulique (1).
